(19) Europäisches Patentamt
European Patent Office
Office européen des brevets

(11) EP 1 648 097 B1

# (12) EUROPEAN PATENT SPECIFICATION

(45) Date of publication and mention of the grant of the patent:
**15.05.2013 Bulletin 2013/20**

(51) Int Cl.:
***H04B 7/06*** *(2006.01)* ***H04L 1/06*** *(2006.01)*
***H04B 7/02*** *(2006.01)*

(21) Application number: **05022351.0**

(22) Date of filing: **13.10.2005**

(54) **Transmission apparatus and method for a base station using block coding and cyclic delay diversity techniques in an OFDM mobile communication system**

Übertragungsvorrichtung und Verfahren für eine Basisstation, die Blockcodierung und zyklische Verzögerungs-Diversitäts-Techniken in einem mobilen OFDM-Kommunikationssystem verwenden

Appareil de transmission et procédé pour une station de base utilisant codage en blocs et des techniques de diversité de retard cyclique dans un système de communication mobile de multiplexage fréquentiel orthogonal (OFDM)

(84) Designated Contracting States:
**DE FI FR GB IT SE**

(30) Priority: **13.10.2004 KR 2004081713**

(43) Date of publication of application:
**19.04.2006 Bulletin 2006/16**

(73) Proprietor: **Samsung Electronics Co., Ltd.**
**Suwon-si, Gyeonggi-do, 443-742 (KR)**

(72) Inventors:
- **OH, Hyun-Seok**
  **Yeongtong-gu**
  **Suwon-si**
  **Gyeonggi-do (KR)**
- **Kim, Sang-Hyo**
  **Yeongtong-gu**
  **Suwon-si**
  **Gyeonggi-do (KR)**
- **Kim, Sung-Soo**
  **Yeongtong-gu**
  **Suwon-si**
  **Gyeonggi-do (KR)**
- **Kim, Min-Goo**
  **Yeongtong-gu**
  **Suwon-si**
  **Gyeonggi-do (KR)**

(74) Representative: **Hutter, Jacobus Johannes et al**
**Nederlandsch Octrooibureau**
**J.W. Frisolaan 13**
**2517 JS The Hague (NL)**

(56) References cited:
**EP-A2- 1 204 219 US-A1- 2004 116 146**

- **HUEBNER A ET AL: "ON SPACE-FREQUENCY CODING USING CYCLIC DELAY DIVERSITY FOR OFDM-BASED TRANSMISSION SYSTEMS" EUROPEAN TRANSACTIONS ON TELECOMMUNICATIONS, WILEY & SONS, CHICHESTER, GB, vol. 14, no. 6, 1 November 2003 (2003-11-01), pages 491-500, XP001185697 ISSN: 1124-318X**
- **DAMMAN A ET AL: "On the equivalence of Space-Time Block Coding with Multipath Propagation and/or Cyclic Delay Diversity in OFDM" (CONFERENCE INFO: IEEE EUROPEAN WIRELESS, FLORENCE, ITALY, 2002),, 1 January 2002 (2002-01-01), XP009131191**
- **KOOCHUL JUNG ET AL: "Bit and power allocation for MIMO-OFDM systems with spatial mode selection over frequency-space-time-selective channels" 2004 IEEE 60TH VEHICULAR TECHNOLOGY CONFERENCE. VTC2004-FALL - 26-29 SEPT. 2004 - LOS ANGELES, CA, USA, IEEE - PISCATAWAY, NJ, USA, vol. 5, 26 September 2004 (2004-09-26), pages 3404-3408, XP010787507 ISBN: 978-0-7803-8521-4**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 648 097 B1

**Description**

**BACKGROUND OF THE INVENTION**

Field of the Invention

The present invention generally relates to supporting transmit diversity in an orthogonal frequency division multiplexing/code division multiple access (OFDM/CDMA) communication system. More particularly, the present invention relates to an apparatus and method for efficiently supporting transmit diversity for identical broadcast signals transmitted from base stations (BSs) with at least two antennas.

Description of the Related Art

With the increase in content for mobile communication services, the demand of users for multimedia, such as video, audio, text, digital broadcasting, and so on, as well as voice service is explosively increasing. To meet this demand, a large amount of research and development is being conducted on orthogonal frequency division multiplexing (OFDM) corresponding to one method for efficiently transmitting high-speed data. The OFDM scheme is considered a fourth-generation (4G) mobile communication, in other words a next-generation mobile communication technology. Moreover, the OFDM scheme is being standardized along with the development of ultra high-speed packet transmission technology.

A mobile communications station (MS) can perform communications by receiving a signal transmitted from an associated cell located in the same mobile communication system as the MS. For communications to occur, a suitable signal transmission scheme is required that considers shadowing areas in which a transmitted signal is weakened, hot spot areas in which a large number of MSs are concentrated, or rural areas in which a small number of MSs are available.

A base station (BS) uses transmit diversity to ensure a transmission signal for an MS located in a cell covered by the BS. Because, a signal transmitted from another cell neighboring to the cell of the BS serves as a factor capable of reducing communication performance of the MS.

A need exists for a transmission structure that can support macro diversity in an associated cell and support more suitable diversity using multiple antennas of BSs within the cell, when identical broadcast signals are transmitted from a cell of a BS and its neighbor cell to support a broadcast service.

In the article "On space-frequency coding using cyclic delay diversity for OFDM-based transmission systems" (European Transactions on Telecommunications, Wiley & Sons, Chichester, GB Vol. 14 no. 6, 1 November 2003), a space-frequency coding scheme using cyclic delay diversity (CDD) for an orthogonal frequency division multiplexing (OFDM)-based transmission system is presented. The selection of the time domain cyclic delays in the CCD is optimized so as to get full spatial diversity with the proposed space-frequency codes with CDD scheme.

In the article "On the equivalence of Space-Time Block Coding with multipath Propagation and/or Cyclic Delay Diversity in OFDM" (Conference info: IEEE European Wireless, Florence, Italy, 1 January 2002), the equivalence of Space-Time block coding to multipath propagation with respect to Cyclic Delay Diversity for OFDM systems is shown. Existing Space-Time code design criteria can be applied and methods for Space-Time code construction using Cyclic Delay Diversity OFDM systems in multipath propagation environments are analyzed.

SUMMARY OF THE INVENTION

An object of the present invention to provide a transmission apparatus and method for use in a base station (BS) that can support transmit diversity in an (OFDM/CDMA) communication system.

Another object of the present invention is to provide a transmission apparatus and method for use in a base station (BS) that can efficiently support transmit diversity for identical broadcast signals transmitted from BSs with at least two antennas in an orthogonal frequency division multiplexing/code division multiple access (OFDM/CDMA) communication system.

In accordance with an embodiment of the present invention for achieving the above and other objects, there is provided a method for using block coding and cyclic delay diversity techniques in a plurality of base station (BSs) of an orthogonal frequency division multiplexing (OFDM) mobile communication system. The method comprises the steps of evaluating a radio channel state of a mobile station (MS) in a radio network controller (RNC) and sending information for implementing diversity to said plurality of BSs located in one cell. The cell is configured by three sectors and each of the BSs are provided with at least two transmit antennas. The method further comprises performing space-time block coding on data to be transmitted from the BSs according to the information sent for implementing diversity, applying different cyclic delays to the data, and transmitting the data to the MS through the at least two transmit antennas.

In accordance with another embodiment of the present invention for achieving the above and other objects, there is provided a method for using block coding and cyclic delay diversity techniques in a plurality of base station (BSs) of an orthogonal frequency division multiplexing (OFDM) mobile communication system. The method comprises evaluating a radio channel state of a mobile station (MS) in a radio network controller (RNC) and sending information for implementing diversity to said plurality of BSs located in one cell configured by three sectors. Each of the BSs is provided with at least two transmit antennas. The method may also comprise performing space-frequency block coding on data to be transmitted from the BSs according to the information sent for implementing diversity, applying different cyclic delays to the data, and transmitting the data to the MS through the
at least two transmit antennas provided in each BS.

In accordance with another embodiment of the present invention for achieving the above and other objects, there is provided an orthogonal frequency division multiplexing (OFDM) mobile communication system,. comprising a plurality of base stations BSs, each BS located in one cell configured by three sectors, using block coding and cyclic delay diversity techniques, each base station comprising: a space-time coding block for sequentially receiving a first N-length data stream and a second N-length data stream, the space-time coding block being configured to perform coding to generate N-length symbol vectors according to a designated space-time code, and output the N-length symbol vectors in parallel. The apparatus may also comprise a plurality of inverse transform processors for outputting N-length multicarrier symbols based on a time domain transformation from the N-length symbol vectors, the inverse transform processors corresponding to the number of transmit antennas, and delay elements for delaying the N-length multicarrier symbols output from the inverse transform processors by designated delay values and outputting the delayed symbols.

In accordance with yet another embodiment of the present invention for achieving the above and other objects, there is provided an apparatus for a base station (BS) using block coding and cyclic delay diversity techniques in an orthogonal frequency division multiplexing (OFDM) mobile communication sys tem. The apparatus comprises a space-frequency coding block for receiving a first N-length data stream and a second N-length data stream, the space-frequency coding block being configured to sequentially input first N/2-length data and second N/2-length data, combining the two data streams, and output N-length symbol vectors in parallel according to a space-frequency code. The apparatus may also comprise a plurality of inverse transform processors for outputting N-length multicarrier symbols based on a time domain transformation from the N-length symbol vectors, the inverse transform processors corresponding to the number of transmit antennas, and delay elements for delaying the N-length multicarrier symbols output from the inverse transform processors by designated delay values and outputting the delayed symbols.

## BRIEF DESCRIPTION OF THE DRAWINGS

The above and other features and advantages of the present invention will be more apparent from the description of certain exemplary embodiments within the following detailed description taken in conjunction with the accompanying drawings, in which:

FIG. 1 illustrates an exemplary cell structure in which the present invention is applied;
FIG. 2 shows a block diagram illustrating a transmission structure of a base station (BS) using space-time block coding (STBC) and cyclic delay diversity techniques in accordance with an exemplary embodiment of the present invention;
FIG. 3 shows a block diagram illustrating details of the cyclic delay diversity technique illustrated in FIG. 2;
FIG. 4 shows a block diagram illustrating details of the STBC technique illustrated in FIG. 2;
FIG. 5 shows a block diagram illustrating a transmission structure of a BS using space-frequency block coding (SFBC) and cyclic delay diversity techniques in accordance with another exemplary embodiment of the present invention;
FIG. 6 shows a block diagram illustrating details of the SFBC technique illustrated in FIG. 5;
FIG. 7 shows a block diagram illustrating a structure for controlling a transmission operation of the BS in a radio network controller (RNC) in accordance with an aspect of the present invention; and
FIG. 8 depicts a graph illustrating a performance comparison between a conventional system and a system in accordance with the present invention.

Throughout the drawings, like reference numbers should be understood to refer to like elements, features and structures.

## DETAILED DESCRIPTION OF EXEMPLARY EMBODIMENTS

The matters exemplified in this description are provided to assist in a comprehensive understanding of various embodiments of the present invention disclosed with reference to the accompanying figures. Accordingly, those of ordinary skill in the art will recognize that various changes and modifications of the exemplary embodiments described herein can be made without departing from the scope of the claimed invention. Descriptions of well-known functions and constructions are omitted for clarity and conciseness. It is to be understood that the phraseology and terminology employed herein are for the purpose of description and should not be regarded as limiting the present invention.

Certain embodiments of the present invention propose a transmission apparatus and method of using a base station (BS) for providing more suitable transmit diversity in a mobile communication system supporting orthogonal frequency division multiplexing/ high-speed downlink packet access (OFDM/HSDPA).

A transmission structure of a BS using space-time block coding (STBC) and cyclic delay diversity techniques in accordance with an embodiment of the present invention will be described. Moreover, a transmission structure of a BS using space-frequency block coding (SFBC) and cyclic delay diversity techniques in accordance with a another embodiment of the present invention will be described. BSs are provided with at least two antennas that transmit identical signals with different delay times, such that a mobile station (MS) ensures performance gain.

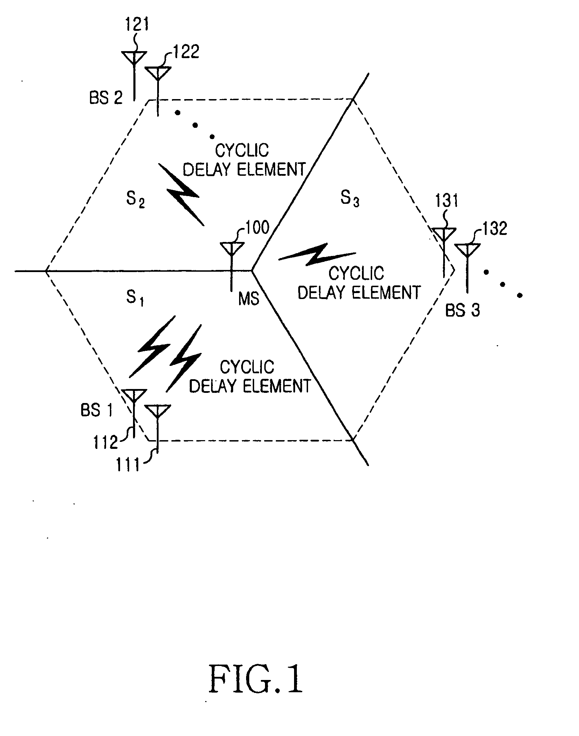

FIG. 1 illustrates an exemplary cell structure in which the present invention is applied. Referring to FIG. 1, MS 100 is a terminal for receiving a broadcast service through a broadcast channel in a mobile communication system. The MS 100 may pass through a hot spot area within the heart of the city, or a rural or mountain area in which available signal is weak. Multipath channel characteristics differ according to geographic location.

For example, when MS 100 is located within a hot spot area in the heart of the city, where, typically, the number of neighboring cells is large and the distance between the cells is short, MS 100 receives a sufficient number of multipath channels through multiple paths even though cyclic delay diversity does not exist. On the other hand, when MS 100 moves to a remote rural or mountain area, the distance between cells is far and the number of multipath channels are insufficient. MS 100 can obtain fading gain from multipath channels transmitted from BSs of each cell by applying a cyclic diversity demodulation scheme to signals transmitted from cells.

As shown in FIG. 1, MS 100 is located in an overlapping area between three sectors covered by three different BSs. Each BS transmits a broadcast channel to the MS 100 located in the cell using at least one transmit antenna, respectively. The BSs transmit STBC or SFBC signals through multiple antennas, 111, 112, 121, 122, 131, and 132. MS 100 receives data through an identical frequency from each of the three BSs, BS1, BS2, and BS3. Data with different cyclic delays is transmitted from BS1, BS2, and BS3. MS 100 receives the data with the different cyclic delays through different paths, thereby obtaining the effect of macro diversity.

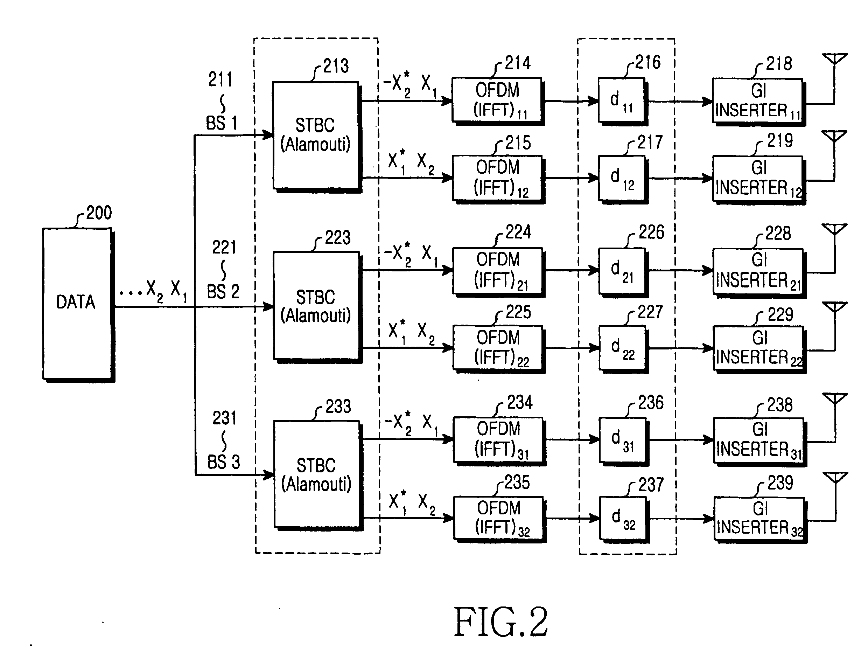

FIG. 2 is a block diagram illustrating a transmission structure of a BS in accordance with an exemplary embodiment of the present invention. In this embodiment, it is assumed that a channel is constant during a period of at least two OFDM symbols.

Referring to FIG. 2, an N-data stream 200 is transferred to three BSs, BS1 211, BS2 221, and BS3 231. At this time, data stream 200 is provided in the sequence of $X_1 = [X_1(0), X_1(1),...,X_1(N/2-1)]^T$ and $X_2 = [X_2(0), X_2(1), ... ,X_2(N/2-1)]^T$. The BS has a parallel transmission structure in which input data $X_1$ and $X_2$ use OFDM multicarriers. STBC blocks 213, 223, and 233 provided in BS1, BS2, and BS3 perform STBC on the input data stream in an N-length vector unit and output STBC signals, respectively.

STBC blocks 213, 223, and 233 perform STBC on the data stream 200 of sequentially input data $X_1$ and $X_2$, then output STBC signals to inverse fast Fourier transform (IFFT) processors 214, 215, 224, 225, 234, and 235. The IFFT processors 214, 215, 224, 225, 234, and 235 generate N multicarrier signals based on a process of multiple division from a sequentially input data stream using an IFFT operation, in other words, an OFDM modulation operation and the IFFT possessors transform N parallel OFDM signals of the OFDM modulation into time domain signals, respectively.

The time domain signals output from the IFFT processors 214, 215, 224, 225, 234, and 235 are artificially delayed by delay elements, $d_{11}$ 216, $d_{12}$ 217, $d_{21}$ 226, $d_{22}$ 227, $d_{31}$ 236, and $d_{32}$ 237, such that cyclic delay diversity can be obtained. That is, a cyclic delay level associated with each antenna is controlled such that the maximum diversity can be obtained. The delay elements, $d_{11}$ 216, $d_{12}$ 217, $d_{21}$ 226, $d_{22}$ 227, $d_{31}$ 236, and $d_{32}$ 237, correspond to the number of antennas and are controlled such that they have one of delay values d1 and d2, respectively. The delay elements output the delayed time domain signal to the guard interval (GI) inserters.

Guard interval (GI) inserters 218, 219, 228, 229, 238, and 239 detect time domain signals corresponding to cyclic prefixes (CPs) from the data of N OFDM samples output by the delay elements, $d_{11}$ 216, $d_{12}$ 217, $d_{21}$ 226, $d_{22}$ 227, $d_{31}$ 236, and $d_{32}$ 237. Then, the GI inserters 218, 219, 228, 229, 238, and 239 perform a subtraction operation using a predetermined CP value, and arrange the detected CP signals in a predefined position on the time axis. A CP is set to a GI of G samples, and is inserted before the OFDM sample data. Then, the OFDM sample data containing the GI is output. Hereinafter, an OFDM symbol into which a GI has been inserted is referred to as an OFDM transmission symbol. The BS transmits a generated OFDM transmission symbol through at least one antenna.

As described above in relation to FIGS. 1 and 2, the three BSs transmit identical signals on N-length subcarriers during a two-symbol period through three pairs of antennas (111, 112; 121, 122; 131, 132) in accordance with an exemplary embodiment of the present invention. The cyclic delay is applied for each antenna of the BS. During the two-symbol period, a space-time block code is formed on one subchannel. A cyclic delay controller controls a cyclic delay level associated with each antenna such that the maximum diversity can be obtained. Within one BS, for example, $d_{11} = d_{12}$ can be set.

An MS at the receiving side estimates two channels as it detects that two transmit antennas are present. The MS obtains space-time diversity using a space-time block code reception method. Cyclic delay diversity is obtained from signals transmitted through three antennas.

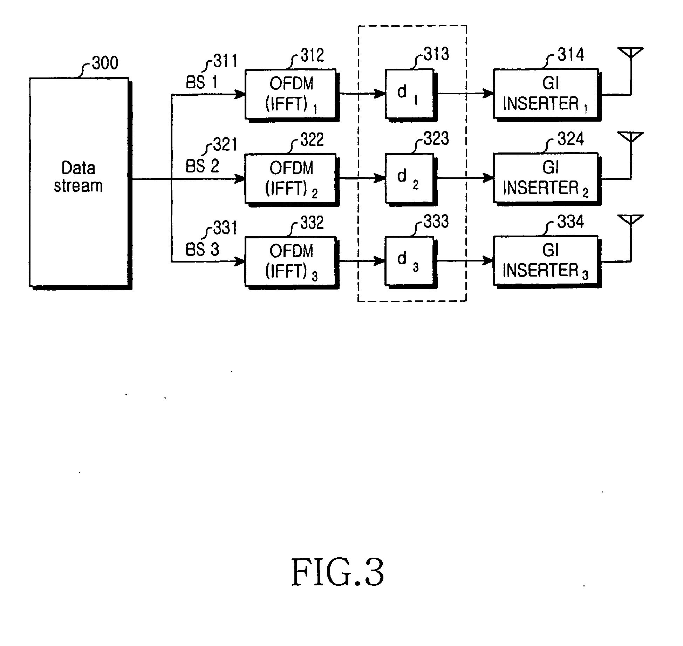

FIG. 3 shows a block diagram illustrating details of the cyclic delay diversity technique illustrated in FIG. 2. The structure of FIG. 3 transmits identical data streams 300 from three BSs, BS1, BS2, and BS3, when the three BSs are located in one cell.

Data stream 300 is simultaneously transferred to the three BSs, BS1, BS2, and BS3. In BS1 311, an IFFT processor 312 generates data of N OFDM samples from the sequentially input data stream 300 and outputs the data of N OFDM samples in parallel. A delay element $d_1$ 313 delays the OFDM sample data, provides parallel output by a delay value $d_1$, then outputs the delayed data to GI inserter 314. GI inserter 314 copies data of the last G OFDM samples among the data of N OFDM samples configuring an OFDM symbol, and inserts the copied data before the OFDM symbol. The GI inserter 314 outputs the OFDM symbol into which the copied data has been inserted. An OFDM transmission symbol output from the GI inserter 314 is transmitted through an antenna.

In BS2 321, an IFFT processor 322 generates data of N OFDM samples from the sequentially input data stream 300 and outputs the data of N OFDM samples in the parallel fashion. A delay element $d_2$ 323 delays the OFDM sample data, provides parallel output by a delay value $d_2$, then outputs the delayed data to GI inserter 324. The delay value of $d_2$ is different from the delay value $d_1$ of delay element $d_1$ 313. GI inserter 324 copies data of the last G OFDM samples among the data of N OFDM samples configuring an OFDM symbol, and inserts the copied data before the OFDM symbol. The GI inserter 324 outputs the OFDM symbol into which the copied data has been inserted. An OFDM transmission symbol output from the GI inserter 324 is transmitted through an antenna.

In BS3 331, an IFFT processor 332 generates data of N OFDM samples from the sequentially input data stream 300 and outputs the data of N OFDM samples in the parallel fashion. A delay element 333 delays the OFDM sample data, provides parallel output by a delay value $d_3$, then outputs the delayed data to GI inserter 334. The delay value $d_3$ is different from the delay value $d_1$ of delay element $d_1$ 313, and the delay value $d_2$ of delay element $d_2$ 323. GI inserter 334 copies data of the last G OFDM sample among the data of N OFDM samples configuring an OFDM symbol, and inserts the copied data before the OFDM symbol. The GI inserter 334 outputs the OFDM symbol into which the copied data has been inserted. An OFDM transmission symbol output from the GI inserter 334 is transmitted through an antenna.

The three BSs, i.e., BS1, BS2, and BS3, are each provided with one antenna. Data stream 300 is transmitted from the antennas to the MS through different paths. The MS at the receiving side soft-combines the identical data streams 300 transferred through the different paths, such that the received data stream 300 is ensured.

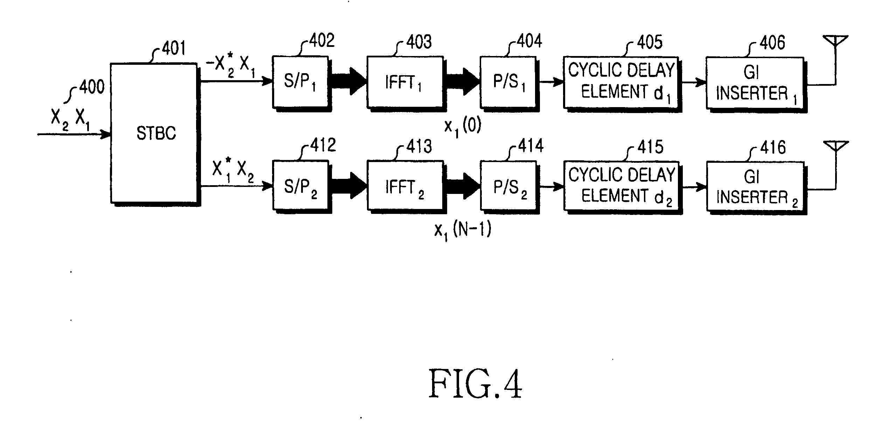

FIG. 4 shows a block diagram illustrating details of the STBC technique illustrated in FIG. 2. Referring to FIG. 4, one BS transmits data through multiple paths using two antennas. That is, the BS performs an STBC operation and an OFDM modulation operation for 2N modulated symbol elements present in two symbols and outputs data to the two antennas.

STBC block 401 sequentially receives OFDM symbols $X_1 = [X_1(0), X_1(1),...,X_1(N\text{-}1)]^T$ and $X_2 = [X_2(0),X_2(1),..., X_2(N\text{-}1)]^T$ in sequence, then simultaneously outputs 2N vector data elements of STBC in parallel. That is, the STBC block 401 codes data input in the sequence of $X_1$ and $X_2$ to generate and output the coded data $X_1$ and - $X^*_2$ for a first antenna. Moreover, the STBC block 401 generates and outputs the coded data in the sequence of $X_2$ and $X_1^*$ for a second antenna.

Serial-to-parallel (S/P) converter 402 sequentially receives vector data $X_1$ and - $-X_2^*$ with a unit of N elements output from STBC block 401 and outputs N parallel data elements to IFFT processor 403. IFFT processor 403 processes the parallel data from S/P converter 402, then outputs data of N OFDM samples $[X_1(0),X_1(1),...,X_1(N\text{-}1)]$ in parallel. A first parallel-to-serial (P/S) converter 404 receives the OFDM sample data output from the IFFT processor 403 in parallel, converts the parallel data into serial data, and outputs the serial data to delay element 405. Delay element 405 applies a cyclic delay value $d_1$ to the data of N OFDM samples and outputs the delayed data to GI inserter 406. GI inserter 406 copies data of the last G OFDM samples among the data of N OFDM samples configuring an OFDM symbol, and inserts the copied data before the OFDM symbol. The GI inserter 406 outputs a signal of $[x_1(d_1\text{-}g), x_1(d_1\text{-}1), x_1(d_1\text{-}2)/x_1(d_1), x_1(d_1\text{+}1), x_1(d_1\text{-}1)]$. An OFDM transmission symbol with the delay value $d_1$ is transmitted through a first antenna.

S/P converter 412 sequentially receives vector data $X_2$ and $X_1^*$ with a unit of N elements output from STBC block 401 and outputs N parallel data elements to IFFT processor 413. IFFT processor 413 processes the parallel data from S/P converter 412, then outputs data of N OFDM samples in the parallel fashion. A second P/S converter 414 receives the OFDM sample data output from the IFFT processor 413 in parallel, converts the parallel data into serial data, and outputs the serial data to delay element 415. Delay element 415 applies a cyclic delay value $d_2$ to the data of N OFDM samples and outputs the delayed data to GI inserter 416. GI inserter 416 copies data of the last G OFDM samples among the data of N OFDM samples configuring an OFDM symbol, and inserts the copied data before the OFDM symbol. The GI inserter 416 outputs a signal of [$x_1(d_2$-g), $x_1(d_1$-1), $x_1(d_2$-2)/$x_1(d_2)$, $x_1(d_2$+1), $x_1(d_2$-1)]. An OFDM transmission symbol with the delay value $d_2$ is transmitted through a second antenna.

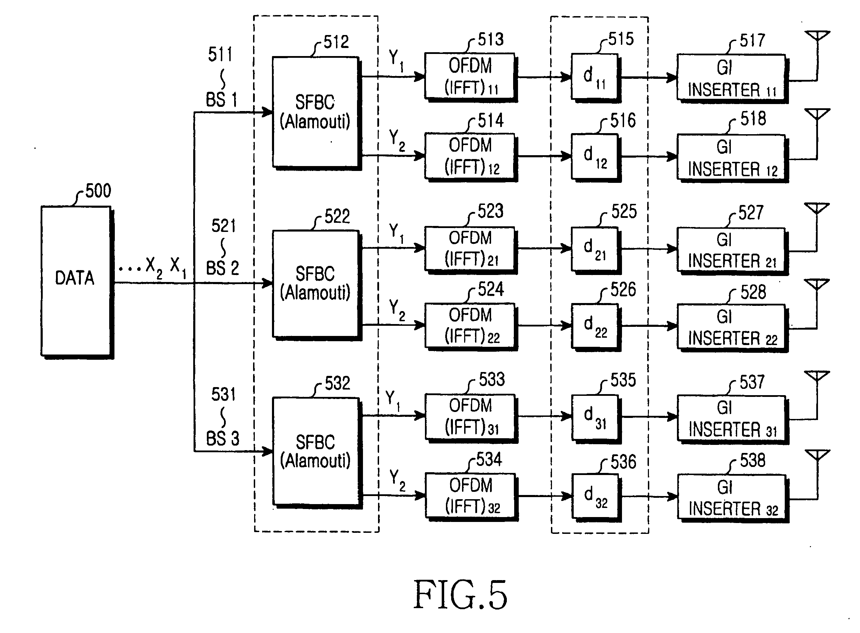

FIG. 5 shows a block diagram illustrating a transmission structure of a BS using SFBC and cyclic delay diversity techniques in accordance with another exemplary embodiment of the present invention. The structure of FIG. 5 performs an SFBC operation and an OFDM modulation operation for N modulated symbol elements present in an OFDM symbol and outputs data to two antennas. N/2-length vectors are sequentially input to an SFBC block. Referring to FIG. 5, an N-data stream 500 to be transmitted are transferred to three BSs, BS1 511, BS2 521, and BS3 531. At this time, the data stream 500 is input in the sequence of $X_1 =[X_1(0),X_1(1),...,X_1(N/2-1)]^T$ and $X_2 =[X_2(0),X_2(1),...,X_2(N/2-1)]^T$.

SFBC blocks 512, 522, and 532 combine two vector inputs, apply a space-time block code on a frequency domain, and output N/2 number of $Y_1$ data elements and N/2 number of $Y_2$ data elements for one OFDM symbol. The $Y_1$ and $Y_2$ data is output to IFFT processors 513, 514, 523, 524, 533, and 534. The IFFT processors 513, 514, 523, 524, 533, and 534 perform an IFFT operation, in other words, an OFDM modulation operation on the $Y_1$ and $Y_2$ data, and transforms N parallel OFDM signals based on the OFDM modulation into time domain signals. The time domain signals output from the IFFT processors are artificially delayed and output by delay elements, $d_{11}$ 515, $d_{12}$ 516, $d_{21}$ 525, $d_{22}$ 526, $d_{31}$ 535, and $d_{32}$ 536, such that cyclic delay diversity can be obtained.

GI inserters 517, 518, 527, 528, 537, and 538 detect time domain signals corresponding to CPs from the data of N OFDM samples output from delay elements, $d_{11}$ 515, $d_{12}$ 516, $d_{21}$ 525, $d_{22}$ 526, $d_{31}$ 535, and $d_{32}$ 536. Then, the GI inserters 517, 518, 527, 528, 537, and 538 perform a subtraction operation using a predetermined CP value, and arrange the detected CP signals in a predefined position on the time axis. A CP is set to a GI of G samples, and is inserted before the OFDM sample data. Then, the OFDM sample data containing the GI is output. Hereinafter, an OFDM symbol into which a GI has been inserted is referred to as an OFDM transmission symbol. The BS sends a generated OFDM transmission symbol through at least one antenna.

In accordance with the exemplary embodiment described above, a space-frequency block code is configured by combining symbols mapped to two adjacent subcarriers and cyclic delay is applied after the IFFT processors 513, 514, 523, 524, 533, and 534, such that macro diversity is obtained. Cyclic delay is applied within the BS according to the condition $d_{11} = d_{12}$, $d_{21} = d_{22}$, and $d_{31} = d_{32}$, such that orthogonality in the space-frequency block code is not destructed.

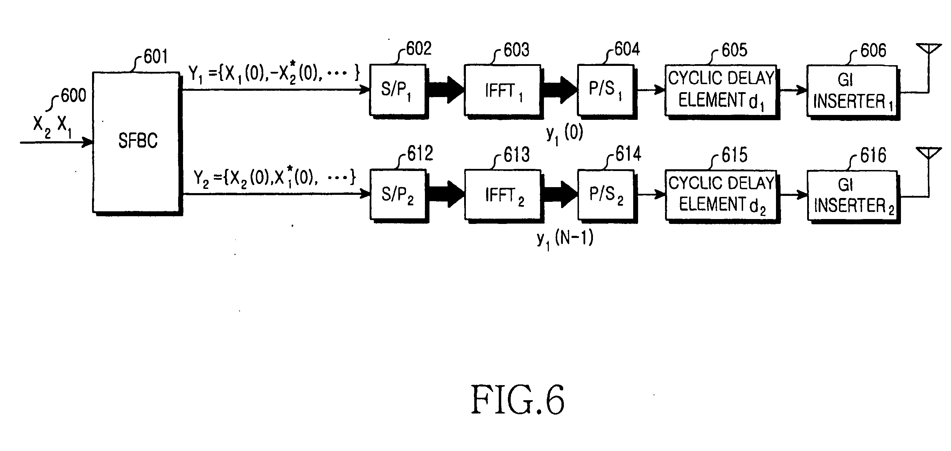

FIG. 6 shows a block diagram illustrating details of the SFBC technique illustrated in FIG. 5. The structure of FIG. 6 receives two N/2-length vectors and outputs OFDM symbols of SFBC.

SFBC block 601 receives $X_1$ and $X_2$ in order. $X_1$ is input in sequence of $X_1 = [X_1(0),X_1(1), ... ,X_1(N/2-1)]^T$ and $X_2$ is input in sequence of $X_2 = [X_2(0),X_2(1), ... ,X_2(N/2 -1)]^T$. The SFBC block 601 outputs N-length $Y_1$ and $Y_2$ vectors.

$$Y_1 = [X_1(0),-X_2^*(0),X_1(1),-X_2^*(1),\ldots,X_1(N/2-1),-X_2^*(N/2-1)]^T.$$

$$Y_2 = [X_2(0),X_1^*(0),\ldots,X_2(N/2-1),X_1^*(N/2-1)]^T.$$

That is, the SFBC block 601 configures one space-frequency block code by combining elements of the $Y_1$ and $Y_2$ vectors two by two.

Serial-to-parallel (S/P) converter 602 sequentially receives N-length vector data of $[X_1(0),-X_2^*(0),X_1(1),-X_2^*(1),\ldots,X_1(N/2-1),-X_2^*(N/2-1)]^T$ output from SFBC block 601, then outputs N parallel data elements. IFFT processor 603 processes the parallel data of S/P converter 602, then outputs data of N OFDM samples of $y_1(0)$.

Parallel-to-serial (P/S) converter 604 receives the OFDM sample data output from IFFT processor 603 in parallel, converts the parallel data into serial data, and outputs the serial data. A delay element $d_1$ 605 applies a cyclic delay value $d_1$ to the data of N OFDM samples and outputs the delayed data. GI inserter 606 copies data of the last G OFDM sample among the data of N OFDM samples configuring an OFDM symbol, and inserts the copied data before the OFDM symbol. The GI inserter 606 outputs a signal of [$y_1(d_1$-g), $y_1(d_1$-1), $y_1(d_1$-2)/$y_1(d_1)$, $y_1(d_1$+1), $y_1(d_1$-1)]. An OFDM transmission symbol with the delay value $d_1$ is transmitted through a first antenna.

S/P converter 612 sequentially receives N-length vector data of $[X_2(0),X_1^*(0),\ldots,X_2(N/2-1),X_1^*(N/2-1)]^T$ output from SFBC block 601, then outputs N parallel data elements. IFFT processor 613 processes the parallel data of S/P converter 612, then outputs data of N OFDM samples of $y_1$(N-1).

P/S converter 614 receives the OFDM sample data output from the IFFT processor 613 in parallel, converts the parallel data into serial data, and outputs the serial data. A delay element $d_2$ 615 applies a cyclic delay value $d_2$ to the data of N OFDM samples and outputs the delayed data. GI inserter 616 copies data of the last G OFDM samples among the data of N OFDM samples configuring an OFDM symbol, and inserts the copied data before the OFDM symbol.

The GI inserter 616 outputs a signal of [$y_1(d_2\text{-}g)$, $y_1(d_2\text{-}1)$, $y_1(d_2\text{-}2)/y_1(d_2)$, $y_1(d_2\text{+}1)$, $y_1(d_{2\text{-}}1)$]. An OFDM transmission symbol with the delay value $d_2$ is transmitted through a second antenna.

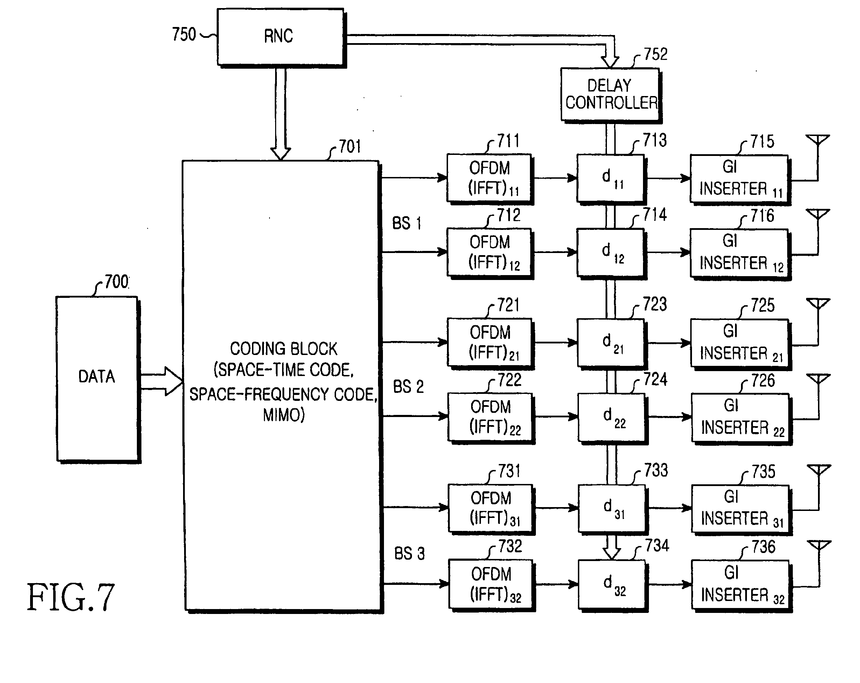

FIG. 7 shows a block diagram illustrating a structure for controlling a transmission operation of a BS in a radio network controller (RNC) in accordance with an aspect of the present invention. Referring to FIG. 7, RNC 750 controls all BSs under its control such that they can simultaneously transmit identical data. Therefore, macro diversity is provided to an MS.

RNC 750 considers the region and geographical features within which an MS is located, the number and location of MSs within the sectors configuring an associated cell, or reception states of MSs, and performs a control operation to provide antenna transmission and cyclic delay techniques most suitable for BSs of the cell and sectors. RNC 750 is provided with a plurality of antennas, and performs a control operation such that the antennas transmit identical data with different delay values according to a control operation of a cyclic delay controller 752. The control operation can be updated in a predetermined period or can be fixed if needed. The cyclic delay value must be greater than the maximum delay spread in a multipath channel such that a maximum diversity effect can be obtained.

To achieve this effect, RNC 750 applies a control signal to a coding block 701. In response to the control signal, coding block 701 performs a space-time or space-frequency coding operation on data stream 700. Moreover, RNC 750 performs a control operation such that various transmit diversity or multiple-input multiple-output (MIMO) structures are implemented. That is, a transmission method based on diversity can be independently performed in each BS or can be performed according to a control signal of RNC 750.Here, RNC 750 defines the above-described serviceable transmission schemes in several modes, stores mode information, allocates predetermined bits to an associated mode, sends the bits to each BS, and controls transmission structure. The processing of data from BS1, BS2, and BS3 through IFFT processors 711, 712, 721, 722, 731, and 732, then through delay elements $d_{11}$ 713, $d_{12}$ 714, $d_{21}$ 723, $d_{22}$ 724, $d_{31}$ 733, and $d_{32}$ 734, subject to control of delay controller 752, then to GI inserters 715, 716, 715, 726, 735, and 736, occurs in a manner similar to the technique illustrated in FIG. 5, above.

The example in which each BS is provided with two transmit antennas has been described in relation to FIG. 7. Alternatively, each BS may be provided with more than two transmit antennas. For example, BSs sharing a broadcast channel may be provided with at least two or four antennas.

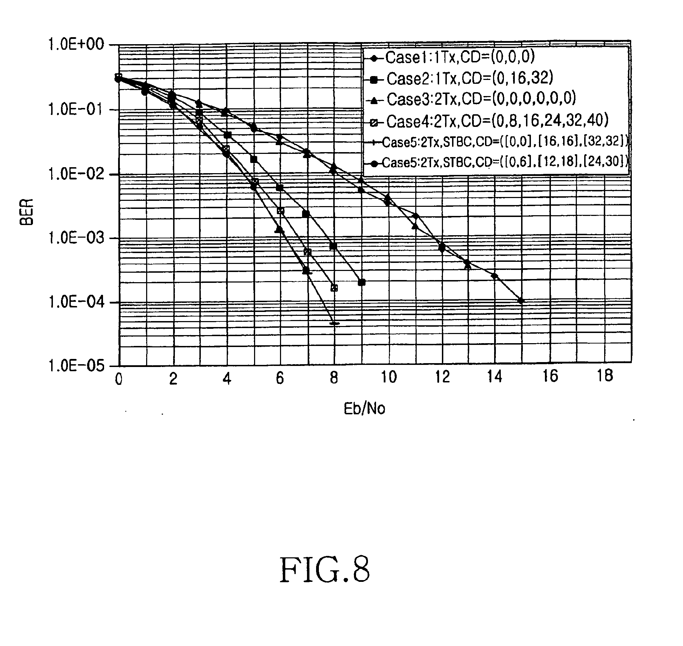

FIG. 8 shows a graph illustrating a performance comparison between a proposed system and a conventional system. In FIG. 8, it is assumed that an MS is located between three sectors covered by three BSs, and that a BS is provided with two transmit antennas for each sector. Moreover, it is assumed that a structure is provided which transmits identical signals through the three neighboring sectors and applies the cyclic delay to each of the identical signals.

Table 1 shows parameters considered by an OFDM system. In this example, an FFT size is N = 64; the channel length and the CP length each correspond to 4 samples; an interleaving scheme uses (16x4) symbol interleaving; and a channel code is a convolutional code with the constraint length of 7.

Table 1

| Parameters | Values |
|---|---|
| FFT size (points) | 64 |
| Channel length | 4 samples |
| Cyclic prefix | 4 samples |
| Channel profiles | Exponentially decaying power with 4 multipaths |
| Coding scheme | 64 states, 1/2 rate, convolutional coding with soft Viterbi decoding |
| Interleaving | 16 by 4 symbol interleaving |
| Modulation | Quadrature Phase Shift Keying (QPSK) |

In reference to FIG. 8, case 1 is a case where each BS with one transmit antenna sends an identical signal. Case 2 is a case where each BS with one transmit antenna sends an identical signal and a cyclic delay diversity of (0, 16, 32) is applied for identical signals. Case 3 is a case where each BS with two transmit antennas sends an identical signal. Case 4 is a case where each BS with two transmit antennas send an identical signal and a cyclic delay diversity of (0, 8, 16, 24, 32, 40) is applied for identical signals. Case 5 is a case where a space-time code is applied, each BS has two transmit antennas, and cyclic delay is applied between BSs in accordance with an aspect of the present invention. In this case, the BSs transmit identical signals by applying the same cyclic delay between transmit antennas within each BS.

On the other hand, Case 6 is a case where a space-time code is applied, each BS has two transmit antennas, and cyclic delay is applied between BSs in accordance with an aspect of the present invention. In this case, the BSs transmit identical signals by applying different cyclic delays between transmit antennas within each BS.

From the data of FIG. 8, it can be seen that when space-time coding and cyclic delay is applied to a coded signal in accordance with an aspect of the present invention, diversity performance is improved.

As is apparent from the above description, aspects of the present invention provide for maximizing transmission efficiency of a mobile station (MS) in a cell by ensuring macro diversity between base stations (BSs) and diversity using multiple antennas within a BS when a broadcast channel is transmitted in a mobile communication system using multiple carriers. Moreover, the present invention can obtain frequency diversity gain in a region in which sufficient gain cannot be obtained from multipath fading channels.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims.

## Claims

1. A method for using block coding and cyclic delay diversity techniques in a plurality of base stations BSs of an orthogonal frequency division multiplexing OFDM mobile communication system, the method comprising:

   evaluating a radio channel state of a mobile station MS in a radio network controller RNC;
   sending information for implementing diversity to said plurality of BSs, each BS located in one cell configured by three sectors, each of the BSs being provided with at least two transmit antennas, the information is determined according to the radio channel state;
   performing space-time block coding on data to be transmitted from the BSs according to the information for implementing diversity;
   applying different cyclic delays to the space-time block coded data for each BS; and
   transmitting the delayed space-time block coded data to the MS through the at least two transmit antennas.

2. The method of claim 1, further comprising:

   grouping signals transmitted through first and second antennas on a sector-by-sector basis; and performing channel estimation in the MS.

3. A method for using block coding and cyclic delay diversity techniques in a plurality of base stations BSs of an orthogonal frequency division multiplexing OFDM mobile communication system, the method comprising:

   evaluating a radio channel state of a mobile station MS in a radio network controller RNC;
   sending information for implementing diversity to said plurality of BSs, each BS located in one cell configured by three sectors, each of the BSs being provided with at least two transmit antennas, the information is determined according to the radio channel state;
   performing space-frequency block coding on data to be transmitted from the BSs according to the information for implementing diversity;
   applying different cyclic delays to the space-frequency block coded data for each BS; and
   transmitting the delayed space-frequency block data to the MS through the at least two transmit antennas provided in each BS.

4. The method of claim 3, further comprising the steps of:

   applying an identical cyclic delay to multicarrier signals on which the space-frequency block coding has been performed in each BS located in each cell according to the information for implementing diversity; and transmitting the delayed multicarrier signals to the MS through the at least two transmit antennas.

5. An orthogonal frequency division multiplexing OFDM mobile communication system comprising a plurality of base stations BSs, each BS located in one cell configured by three sectors, using block coding and cyclic delay diversity techniques, each base station comprising:

   a space-time coding block for sequentially receiving a first N length data stream and a second N-length data stream, the space-time coding block being configured to perform coding to generate N-length symbol vectors using a designated space-time code determined according to control information inputted from a radio network controller and output the N-length symbol vectors in a parallel fashion;

a plurality of inverse transform processors for outputting N length multicarrier symbols based on a time domain transformation from the N-length symbol vectors, the number of the inverse transform processors corresponding to the number of transmit antennas; and
delay elements for delaying the N-length multicarrier symbols output from the inverse transform processors by designated different delay values for each BS and outputting the delayed symbols,
wherein the BS comprises at least two transmit antennas.

**6.** The apparatus of claim 5, wherein the space-time coding block performs space-time coding on the first N-length data stream and the second N-length data stream in parallel according to the number of transmit antennas.

**7.** The apparatus of claim 6, wherein the delay elements comprise identical delay values between transmit antennas within the BS for the N-length multicarrier symbols.

**8.** An orthogonal frequency division multiplexing OFDM mobile communication system comprising a plurality of base stations BSs, each BS located in one cell configured by three sectors, using block coding and cyclic delay diversity techniques, each base station comprising:

a space-frequency coding block for receiving a first N-length data stream and a second N-length data stream, the space-frequency coding block being configured to sequentially input first N/2- length data and second N/2-length data, combining the two data streams, and output N-length symbol vectors in parallel using a space-frequency code determined according to control information inputted from a radio network controller;
a plurality of inverse transform processors for outputting N length multicarrier symbols based on a time domain transformation from the N-length symbol vectors, the number of the inverse transform processors corresponding to the number of transmit antennas; and
delay elements for delaying the N-length multicarrier symbols output from the inverse transform processors by designated different delay values for each BS and outputting the delayed symbols,
wherein the BS comprises at least two transmit antennas.

**9.** The apparatus of claim 8, wherein the space-frequency coding block is configured to receive the first N-length data stream and the second N-length data stream, perform N/2-length space frequency block coding on the first and second N-length data streams in parallel according to the number of transmit antennas, and output the N-length symbol vectors.

**10.** The apparatus of claim 9, wherein the delay elements comprise identical delay values between transmit antennas within the BS for the N-length multicarrier symbols.

## Patentansprüche

**1.** Verfahren zur Anwendung einer Blockcodierung und Diversitäts-Techniken mit zyklischer Verzögerung in mehreren Basisstationen BSs eines Mobilkommunikationssystems mit orthogonalem Frequenzmultiplex OFDM (Orthogonal Frequency Division Multiplex), wobei das Verfahren das Folgende umfasst:

Auswerten eines Funkkanalzustands einer Mobilstation MS in einer Funknetzsteuerung RNC (Radio Network Controller);
Senden von Informationen zum Realisieren einer Diversität an mehreren BSs, wobei jede BS in einer Zelle angeordnet ist, welche durch drei Sektoren konfiguriert ist, wobei jede der BSs mit mindestens zwei Sendeantennen ausgestattet ist, wobei die Informationen gemäß dem Funkkanalzustand bestimmt werden;
Durchführen einer Raum-Zeit-Blockcodierung an Daten, welche von den BSs zu senden sind, gemäß den Informationen zum Realisieren der Diversität;
Anwenden verschiedener zyklischer Verzögerungen auf die Raum-Zeit-blockcodierten Daten für jede BS und Senden der verzögerten Raum-Zeit-blockcodierten Daten an die MS durch die mindestens zwei Sendeantennen.

**2.** Verfahren nach Anspruch 1, welches ferner das Folgende umfasst:

Gruppieren von Signalen, welche durch erste und zweite Antennen Sektor für Sektor gesendet werden; und
Durchführen einer Kanalschätzung in der MS.

3. Verfahren zur Anwendung einer Blockcodierung und Diversitäts-Techniken mit zyklischer Verzögerung in mehreren Basisstationen BSs eines Mobilkommunikationssystems mit orthogonalem Frequenzmultiplex OFDM, wobei das Verfahren das Folgende umfasst:

   Auswerten eines Funkkanalzustands einer Mobilstation MS in einer Funknetzsteuerung RNC;
   Senden von Informationen zum Realisieren einer Diversität an mehreren BSs, wobei jede BS in einer Zelle angeordnet ist, welche durch drei Sektoren konfiguriert ist, wobei jede der BSs mit mindestens zwei Sendeantennen ausgestattet ist, wobei die Informationen gemäß dem Funkkanalzustand bestimmt werden;
   Durchführen einer Raum-Frequenz-Blockcodierung an Daten, welche von den BSs zu senden sind, gemäß den Informationen zum Realisieren der Diversität;
   Anwenden verschiedener zyklischer Verzögerungen auf die Raum-Frequenz-blockcodierten Daten für jede BS und
   Senden der verzögerten Raum-Frequenz-blockcodierten Daten an die MS durch die mindestens zwei Sendeantennen, welche in jeder BS bereitgestellt sind.

4. Verfahren nach Anspruch 3, welches ferner die folgenden Schritte umfasst:

   Anwenden einer identischen zyklischen Verzögerung auf Mehrträgersignale, an welchen die Raum-Frequenz-Blockcodierung durchgeführt worden ist, in jeder BS, die in jeder Zelle angeordnet ist, gemäß den Informationen zum Realisieren der Diversität und Senden der verzögerten Mehrträgersignale an die MS durch die mindestens zwei Sendeantennen.

5. Mobilkommunikationssystem mit orthogonalem Frequenzmultiplex OFDM, welches mehrere Basisstationen BSs aufweist, wobei jede BS in einer Zelle angeordnet ist, welche durch drei Sektoren konfiguriert ist, in welchem eine Blockcodierung und Diversitätstechniken mit zyklischer Verzögerung angewendet werden, wobei jede Basisstation das Folgende aufweist:

   einen Raum-Zeit-Codierungs-Block zum aufeinander folgenden Empfangen eines ersten Datenstroms der Länge N und eines zweiten Datenstroms der Länge N, wobei der Raum-Zeit-Codierungs-Block dafür konfiguriert ist, eine Codierung durchzuführen, um unter Verwendung eines festgelegten Raum-Zeit-Codes, der gemäß Steuerungsinformationen bestimmt wird, die von einer Funknetzsteuerung eingegeben werden, Symbolvektoren der Länge N zu erzeugen und die Symbolvektoren der Länge N parallel auszugeben;
   mehrere Inverstransformationsprozessoren zum Ausgeben von Mehrträgersymbolen der Länge N auf der Basis einer Zeitdomänenumwandlung aus den Symbolvektoren der Länge N, wobei die Anzahl der Inverstransformationsprozessoren der Anzahl der Sendeantennen entspricht; und
   Verzögerungselemente zum Verzögern der Ausgabe der Mehrträgersymbole der Länge N aus den Inverstransformationsprozessoren um festgelegte verschiedene Verzögerungswerte für jede BS und Ausgeben der verzögerten Symbole,
   wobei die BS mindestens zwei Sendeantennen aufweist.

6. Vorrichtung nach Anspruch 5, wobei der Raum-Zeit-Codierungs-Block die Raum-Zeit-Codierung an dem ersten Datenstrom der Länge N und dem zweiten Datenstrom der Länge N parallel gemäß der Anzahl der Sendeantennen durchführt.

7. Vorrichtung nach Anspruch 6, wobei die Verzögerungselemente für die Mehrträgersymbole der Länge N identische Verzögerungswerte zwischen Sendeantennen innerhalb der BS aufweisen.

8. Mobilkommunikationssystem mit orthogonalem Frequenzmultiplex OFDM, welches mehrere Basisstationen BSs aufweist, wobei jede BS in einer Zelle angeordnet ist, welche durch drei Sektoren konfiguriert ist, in welchem eine Blockcodierung und Diversitätstechniken mit zyklischer Verzögerung angewendet werden, wobei jede Basisstation das Folgende aufweist:

   einen Raum-Frequenz-Codierungs-Block zum Empfangen eines ersten Datenstroms der Länge N und eines zweiten Datenstroms der Länge N, wobei der Raum-Frequenz-Codierungs-Block dafür konfiguriert ist, nacheinander erste Daten der Länge N/2 und zweite Daten der Länge N/2 einzugeben, die beiden Datenströme zu kombinieren und Symbolvektoren der Länge N parallel auszugeben, wobei ein Raum-Zeit-Code verwendet wird, der gemäß Steuerungsinformationen bestimmt wird, die von einer Funknetzsteuerung eingegeben werden;
   mehrere Inverstransformationsprozessoren zum Ausgeben von Mehrträgersymbolen der Länge N auf der Basis einer Zeitdomänenumwandlung aus den Symbolvektoren der Länge N, wobei die Anzahl der Inverstransformationsprozessoren der Anzahl der Sendeantennen entspricht; und
Verzögerungselemente zum Verzögern der Ausgabe der Mehrträgersymbole der Länge N aus den Inverstransformationsprozessoren um festgelegte verschiedene Verzögerungswerte für jede BS und Ausgeben der verzögerten Symbole,
wobei die BS mindestens zwei Sendeantennen aufweist.

**9.** Vorrichtung nach Anspruch 8, wobei der Raum-Frequenz-Codierungs-Block dafür konfiguriert ist, den ersten Datenstrom der Länge N und den zweiten Datenstrom der Länge N zu empfangen, an dem ersten und zweiten Datenstrom der Länge N eine Raum-Frequenz-Blockcodierung der Länge N/2 parallel gemäß der Anzahl der Sendeantennen durchzuführen und die Symbolvektoren der Länge N auszugeben.

**10.** Vorrichtung nach Anspruch 9, wobei die Verzögerungselemente für die Mehrträgersymbole der Länge N identische Verzögerungswerte zwischen Sendeantennen innerhalb der BS aufweisen.

## Revendications

**1.** Procédé d’utilisation de codage en blocs et de techniques de diversité de retard cyclique dans une pluralité de stations de base, BS, d’un système de communication mobile de multiplexage fréquentiel orthogonal, OFDM, le procédé comprenant :

l’évaluation d’un état de canal radio d’une station mobile, MS, dans un contrôleur de réseau radio, RNC ;
l’envoi d’informations de mise en oeuvre de diversité à ladite pluralité de BS, chaque BS étant située dans une cellule configurée par trois secteurs, chacune des BS étant pourvue d’au moins deux antennes de transmission, les informations étant déterminées en fonction de l’état de canal radio ;
l’exécution d’un codage en blocs d’espace-temps sur des données à transmettre des BS en fonction des informations de mise en oeuvre de diversité ;
l’application de différents retards cycliques aux données codées en blocs d’espace-temps pour chaque BS ; et
la transmission des données codées en blocs d’espace-temps retardées à la MS par l’intermédiaire des au moins deux antennes transmission.

**2.** Procédé selon la revendication 1, comprenant en outre :

le groupement de signaux transmis par l’intermédiaire de première et deuxième antennes sur une base secteur par secteur ; et l’exécution d’une estimation de canal dans la MS.

**3.** Procédé d’utilisation de codage en blocs et de techniques de diversité de retard cyclique dans une pluralité de stations de base, BS, d’un système de communication mobile de multiplexage fréquentiel orthogonal, OFDM, le procédé comprenant :

l’évaluation d’un état de canal radio d’une station mobile, MS, dans un contrôleur de réseau radio, RNC ;
l’envoi d’informations de mise en oeuvre de diversité à ladite pluralité de BS, chaque BS étant située dans une cellule configurée par trois secteurs, chacune des BS étant pourvue d’au moins deux antennes de transmission, les informations étant déterminées en fonction de l’état de canal radio ;
l’exécution d’un codage en blocs d’espace-fréquence sur des données à transmettre des BS en fonction des informations de mise en oeuvre de diversité ;
l’application de différents retards cycliques aux données codées en blocs d’espace-fréquence pour chaque BS ; et
la transmission des données en blocs d’espace-fréquence retardées à la MS par l’intermédiaire des au moins deux antennes transmission fournies dans chaque BS.

**4.** Procédé selon la revendication 3, comprenant en outre les étapes de :

l’application d’un retard cyclique identique à des signaux à porteuses multiples sur lesquels le codage en blocs d’espace-fréquence a été effectué dans chaque BS située dans chaque cellule en fonction des informations de mise en oeuvre de diversité ; et la transmission des signaux à porteuses multiples retardés à la MS par l’intermédiaire des au moins deux antennes de transmission.

**5.** Système de communication mobile de multiplexage fréquentiel orthogonal, OFDM, comprenant une pluralité de stations de base, BS, chaque BS étant située dans une cellule configurée par trois secteurs, utilisant un codage en blocs et des techniques de diversité de retard cyclique, chaque station de base comprenant :

un bloc de codage d'espace-temps pour recevoir séquentiellement un premier train de données de longueur N et un deuxième train de données de longueur N, le bloc de codage d'espace-temps étant configuré pour effectuer un codage pour générer des vecteurs de symboles de longueur N en utilisant un code d'espace-temps désigné déterminé en fonction d'informations de commande entrées à partir d'un
contrôleur de réseau radio et délivrer les vecteurs de symboles de longueur N en parallèle ;
une pluralité de processeurs de transformée inverse pour délivrer des symboles à porteuses multiples de longueur N sur la base d'une transformation dans le domaine de temps à partir des vecteurs de symboles de longueur N, le nombre de processeurs de transformée inverse correspondant au nombre d'antennes de transmission ; et
des éléments de retard pour retarder les symboles à porteuses multiples de longueur N délivrés à partir des processeurs de transformée inverse par différentes valeurs de retard désignées pour chaque BS et pour délivrer les symboles retardés,
dans lequel la BS comprend au moins deux antennes de transmission.

**6.** Appareil selon la revendication 5, dans lequel le bloc de codage d'espace-temps effectue un codage d'espace-temps sur le premier train de données de longueur N et le deuxième train de données de longueur N en parallèle en fonction du nombre d'antennes de transmission.

**7.** Appareil selon la revendication 6, dans lequel les éléments de retard comprennent des valeurs de retard identiques entre les antennes de transmission à l'intérieur de la BS pour les symboles à porteuses multiples de longueur N.

**8.** Système de communication mobile de multiplexage fréquentiel orthogonal, OFDM, comprenant une pluralité de stations de base, BS, chaque BS étant située dans une cellule configurée par trois secteurs, utilisant un codage en blocs et des techniques de diversité de retard cyclique, chaque station de base comprenant :

un bloc de codage d'espace-fréquence pour recevoir un premier train de données de longueur N et un deuxième train de données de longueur N, le bloc de codage d'espace-fréquence étant configuré pour entrer séquentiellement des premières données de longueur N/2 et des deuxièmes données de longueur N/2, en combinant les deux trains de données, et délivrer des vecteurs de symboles de longueur N en parallèle en utilisant
un code d'espace-fréquence déterminé en fonction d'informations de commande entrées à partir d'un contrôleur de réseau radio ;
une pluralité de processeurs de transformée inverse pour délivrer des symboles à porteuses multiples de longueur N sur la base d'une transformation dans le domaine de temps à partir des vecteurs de symboles de longueur N, le nombre de processeurs de transformée inverse correspondant au nombre d'antennes de transmission ; et
des éléments de retard pour retarder les symboles à porteuses multiples de longueur N délivrés à partir des processeurs de transformée inverse par différentes valeurs de retard désignées pour chaque BS et pour délivrer les symboles retardés,
dans lequel la BS comprend au moins deux antennes de transmission.

**9.** Appareil selon la revendication 8, dans lequel le bloc de codage d'espace-fréquence est configuré pour recevoir le premier train de données de longueur N et le deuxième train de données de longueur N, effectuer un codage en blocs d'espace-fréquence de longueur N/2 sur le premier train de données de longueur N et sur le deuxième train de données de longueur N en parallèle en fonction du nombre d'antennes de transmission, et délivrer les vecteurs de symboles de longueur N.

**10.** Appareil selon la revendication 9, dans lequel les éléments de retard comprennent des valeurs de retard identiques entre les antennes de transmission à l'intérieur de la BS pour les symboles à porteuses multiples de longueur N.

121
122
BS 2
CYCLIC
DELAY ELEMENT
S2
S3
131
132
100
CYCLIC
DELAY ELEMENT
S1
MS
BS 3
CYCLIC
DELAY ELEMENT
BS 1
112
111

FIG.1

DATA
200
...X2 X1
211 BS 1
221 BS 2
231 BS 3
213 STBC (Alamouti)
223 STBC (Alamouti)
233 STBC (Alamouti)
-X2* X1
X1* X2
214 OFDM (IFFT)11
215 OFDM (IFFT)12
224 OFDM (IFFT)21
225 OFDM (IFFT)22
234 OFDM (IFFT)31
235 OFDM (IFFT)32
216 d11
217 d12
226 d21
227 d22
236 d31
237 d32
218 GI INSERTER11
219 GI INSERTER12
228 GI INSERTER21
229 GI INSERTER22
238 GI INSERTER31
239 GI INSERTER32


FIG.2

300
Data stream
311
BS 1
321
BS 2
331
BS 3
312
OFDM (IFFT) 1
322
OFDM (IFFT) 2
332
OFDM (IFFT) 3
313
d 1
323
d 2
333
d 3
314
GI INSERTER 1
324
GI INSERTER 2
334
GI INSERTER 3

FIG.3

400
$X_2 X_1$
401
STBC
$-X_2^* X_1$
$X_1^* X_2$
402
$S/P_1$
412
$S/P_2$
403
$IFFT_1$
413
$IFFT_2$
$x_1(0)$
$x_1(N-1)$
404
$P/S_1$
414
$P/S_2$
405
CYCLIC DELAY ELEMENT $d_1$
415
CYCLIC DELAY ELEMENT $d_2$
406
GI INSERTER $_1$
416
GI INSERTER $_2$


FIG.4

500
DATA
...X2 X1
511
BS 1
521
BS 2
531
BS 3
512
SFBC (Alamouti)
522
SFBC (Alamouti)
532
SFBC (Alamouti)
Y1
Y2
Y1
Y2
Y1
Y2
513
OFDM (IFFT)11
514
OFDM (IFFT)12
523
OFDM (IFFT)21
524
OFDM (IFFT)22
533
OFDM (IFFT)31
534
OFDM (IFFT)32
515
d11
516
d12
525
d21
526
d22
535
d31
536
d32
517
GI INSERTER 11
518
GI INSERTER 12
527
GI INSERTER 21
528
GI INSERTER 22
537
GI INSERTER 31
538
GI INSERTER 32


FIG.5

600
X2 X1
601
SFBC
Y1 ={X1(0),-X2*(0), ...}
Y2 ={X2(0),X1*(0), ...}
602
S/P1
612
S/P2
603
IFFT1
613
IFFT2
y1(0)
y1(N-1)
604
P/S1
614
P/S2
605
CYCLIC DELAY ELEMENT d1
615
CYCLIC DELAY ELEMENT d2
606
GI INSERTER1
616
GI INSERTER2

FIG.6

RNC
750
DELAY CONTROLLER
752
DATA
700
CODING BLOCK (SPACE-TIME CODE, SPACE-FREQUENCY CODE, MIMO)
701
BS 1
BS 2
BS 3
OFDM (IFFT)11
711
OFDM (IFFT)12
712
OFDM (IFFT)21
721
OFDM (IFFT)22
722
OFDM (IFFT)31
731
OFDM (IFFT)32
732
d11
713
d12
714
d21
723
d22
724
d31
733
d32
734
GI INSERTER 11
715
GI INSERTER 12
716
GI INSERTER 21
725
GI INSERTER 22
726
GI INSERTER 31
735
GI INSERTER 32
736
FIG.7

1.0E+00
1.0E-01
1.0E-02
1.0E-03
1.0E-04
1.0E-05
BER
0
2
4
6
8
10
12
14
16
18
Eb/No
Case1:1Tx,CD=(0,0,0)
Case2:1Tx,CD=(0,16,32)
Case3:2Tx,CD=(0,0,0,0,0,0)
Case4:2Tx,CD=(0,8,16,24,32,40)
Case5:2Tx,STBC,CD=([0,0],[16,16],[32,32])
Case5:2Tx,STBC,CD=([0,6],[12,18],[24,30])

FIG.8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- On space-frequency coding using cyclic delay diversity for OFDM-based transmission systems. European Transactions on Telecommunications. Wiley & Sons, 01 November 2003, vol. 14
- On the equivalence of Space-Time Block Coding with multipath Propagation and/or Cyclic Delay Diversity in OFDM. *Conference info: IEEE European Wireless,* 01 January 2002